# EUROPÄISCHE PATENTSCHRIFT

(11) **EP 0 439 729 B1**
(45) Veröffentlichungstag und Bekanntmachung des Hinweises auf die Patenterteilung: **24.11.1993**
(21) Anmeldenummer: 90123365.0
(22) Anmeldetag: 06.12.1990
(51) Int. Cl.: B60T 8/32, B60T 13/66

(54) **Elektronisch geregelte Druckluftbremsanlage für Fahrzeuge, insbesondere Nutzfahrzeuge**
Electronically controlled pressurized air brake systems for vehicles, especially utility vehicles
Système électronique de freinage à pression d'air pour véhicules, notamment pour véhicules utilitaires

(30) Priorität: 02.02.1990 DE 4003122
(43) Veröffentlichungstag der Anmeldung: 07.08.1991
(73) Patentinhaber: KNORR-BREMSE AG, 80710 München (DE)
(72) Erfinder: Straub, Laszlo, W-8014 Neubiberg (DE)

(56) Entgegenhaltungen:
- EP-A- 0 386 953
- FR-A- 2 313 243
- FR-A- 2 537 520
- FR-A- 2 591 978
- US-A- 3 827 761

## Beschreibung

Die Erfindung betrifft eine Anlage nach dem Gattungsbegriff des Patentanspruches 1.

Bei konventionellen, d.h. nicht elektronisch gesteuerten Druckluftbremsanlagen wird bei Bremsbetätigung der Betriebsbremsdruck achsweise gesteuert. Jeweils ein Kreis eines zweikreisigen Motorwagenbremsventils bedient die Vorderachse (VA) bzw. die Hinterachse (n) (HA) des Fahrzeuges. Die beidseitigen Bremszylinder einer Achse sind hierbei über eine Druckluftleitung zusammengeschlossen, es wirkt also in allen Bremszylindern einer Achse jeweils derselbe Druck. Eine Ausnahme von dieser Regel besteht bei Wirksamwerden der ABS- bzw. ASR-Funktionen, bei denen u.U der Druck radweise (bzw. seitenweise) individuell geregelt wird. Im normalen Betriebsbremsfall ist also ohne Zusatzmaßnahmen eine völlige Druckgleichheit zwischen beiden Seiten einer Achse sichergestellt. Dies sichert im weiteren, von den Radbremseinflüssen abgesehen, gleiche Bremskräfte und gleichen Verschleiß an beiden Seiten einer Achse.

Bei elektronisch geregelten Bremsanlagen sind Lösungen bekannt (FR-A- 2 591 978), bei welchen die Umwandlung vom elektrischen Signal in Druck über radweise montierte elektropneumatische Wandler, nachfolgend als E/P-Umsetzer bezeichnet, erfolgt. Diese E/P-Umsetzer steuern oder regeln den von der Systemlogik für das betroffene Rad vorgegebenen Druck im (in den) Radzylinder (n) des betroffenen Rades oder Radsatzes. Im normalen Betriebsbremsfall, d.h. wenn kein Bedarf für seitenweise individuelle Drücke besteht (kein ABS-, ASR-Fall; kein Ausgleich von seitenweise unterschiedlichem Radbremsverhalten etc.) sollte eine völlige Druckgleichheit zwischen den beidseitigen Bremszylindern gesichert sein.

Bei den bekannten Lösungen versucht man, diese Druckgleichheit durch die zwei E/P-Umsetzer darzustellen. Dies ist jedoch mit Einsatz von industrialisierbaren Lösungen nur bedingt genau und nur mit hohem Kostenaufwand möglich; im besonderen ist bei einem geregelten, als sehr genau geltenden E/P-Wandler mit Drucktoleranzen von > ± 0,15 bar Drucktoleranz zu rechnen (Genauigkeit des verwendeten Druckgebers). Dies kann folglich zu einem systembedingten Druckunterschied von > 0,3 bar zwischen den Zylindern beider Seiten führen.

Ein derartiger Druckunterschied wirkt konsequent und führt innerhalb des für den Verschleiß relevanten Druckbereiches (1,5-2 bar) zu einem 15-2O%igen Verschleißunterschied an den Bremsbelägen der Bremsanlagen der beiden Seiten. Ein derartiger Verschleiß ist in der Praxis jedoch nicht akzeptabel.

Davon ausgehend besteht die Aufgabe der Erfindung darin, eine Vorrichtung zur Sicherung der seitenweisen Druckgleichheit bei Druckluftbremsanlagen der gattungsgemäßen Art so auszugestalten, daß im normalen Betriebsbremsfall absolut gleiche Druckgleichheit zwischen den Bremszylindern der beiden Fahrzeugseiten von Vorderachse und Hinterachse gesichert ist.

Zur Lösung dieser Aufgabe dienen die Merkmale nach dem Kennzeichnungsteil des Patentanspruches 1.

Durch Verwendung der in der Verbindung zwischen den E/P-Umsetzern angeordneten, nach Maßgabe der elektronischen Logik von ABS-, ASR-Anlagen u. dgl. Systemen aktivierbaren Ventile ist es ermöglicht, einfachere und somit billigere E/P-Umsetzer, weniger aufwendige Druckgeber etc. sowohl an der Vorderachse als auch an der Hinterachse des Fahrzeugs zu verwenden.

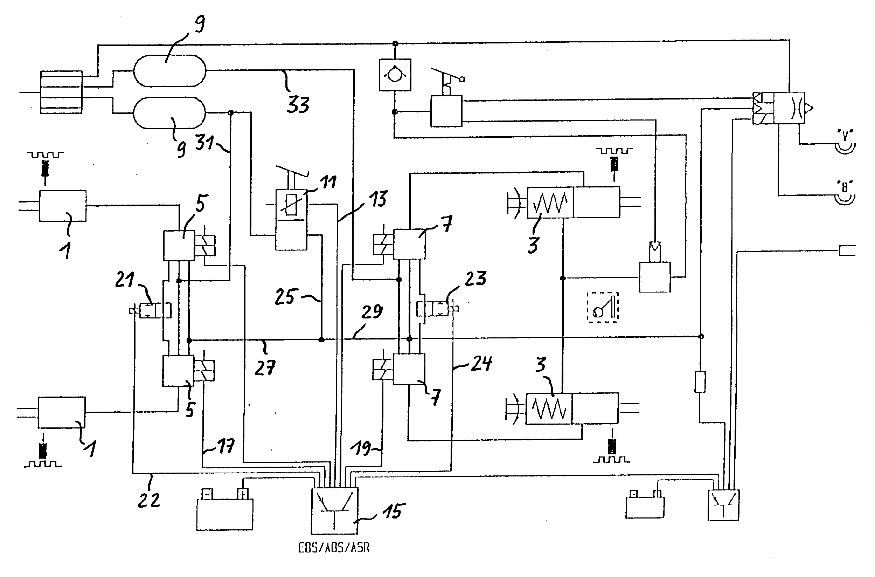

Die Erfindung ist nachfolgend anhand eines Ausführungsbeispiels unter Bezugnahme auf die beigefügte Zeichnung erläutert. In der Zeichnung ist schematisch der Aufbau einer Bremsanlage mit erfindungsgemäßer Sicherung der seitenweisen Druckgleichheit wiedergegeben.

Gemäß der einzigen Zeichnung sind in der schematisch wiedergegebenen Bremsanlage Bremsyzlinder 1 für die Vorderachse und Bremszylinder 3 (kombinierte Betriebsbrems- und Federspeicherbremszylinder) für die Hinterachse vorgesehen; an die Bremszylinder 1 und 3 sind E/P-Umsetzer 5 und 7 angeschlossen. Die E/P-Umsetzer sind von Vorratsbehältern 9 mit Druckluft gespeist und versorgen ihrerseits bei Betätigung die Bremszylinder 1 und 3 mit Druckluft. Zu diesem Zweck ist ein Betätigungsorgan, in Form eines Fußbremsventils 11 dargestellt, vorgesehen, welches als Bestandteil einer EBS-Anlage innerhalb des dargestellten Bremssystems wirkt. Es handelt sich hierbei um ein elektrisches Bremssystem (EBS), welches innerhalb der seiner Betätigungselemente nach pneumatisch ausgelegten Anlage zur Wirkung kommt, wenn das Fußbremsventil 11 zum Zwecke des Abbremsens des Fahrzeugs betätigt wird.

Das Fußbremsventil 11 ist zweikreisig ausgelegt, wobei der erste Kreis zum Zwecke elektrischer Beeinflussung mittels einer elektrischen Steuerleitung 13 mit einer Steuerelektronik 15 für EBS/ABS/ASR verbunden ist. Die Steuerelektronik 15 speist mit Hilfe weiterer elektrischer Steuerleitungen 17 und 19 die E/P-Umsetzer 5 und 7; pro Achsseite ist ein E/P-Umsetzer vorgesehen, wobei Ventile 21 bzw. 23, jeweils als 2/2-Magnetventil ausgebildet, die E/P-Umsetzer 5 und 7, d.h. deren Vorsteuerräume, miteinander verbinden. Die Ventile 21 und 23 in ihrer Ausgestaltung als Magnetventile sind durch mit der Steuerelektronik 15 in Verbindung stehende elektrische Steuerleitungen 22 und 24 gespeist.

Das in der Zeichnung dargestellte Fußbremsventil 11 als Bestandteil einer EBS-Anlage des Bremssystems ist mit einem zweiten, rein pneumatisch wirkenden Kreis für die Vorderachse und die Hinterachse versehen. Der zweite Kreis des Fußbremsventils wirkt im Sinne einer Notbremsanlage, falls der elektrische Kreis, also der erste Kreis, ausfallen sollte. Hierzu ist der von einem der Vorratsbehälter 9 gespeiste zweite Kreis des Fußbremsventils über pneumatische Leitungen 25,27 und 29 an die E/P-Umsetzer 5 bzw. 7 angeschlossen. Bei pneumatischer Hilfsbremsbetätigung wird pneumatischer Druck mit Hilfe des Fußbremsventils und der pneumatischen Leitungen 25-29 unter Verwendung der E/P-Umsetzer 5 und 7 in die Bremszylinder 1 und 3 von Vorderachse und Hinterachse eingespeist, wobei bei den Bremszylindern der Hinterachse hierbei die Betriebsbremseinheiten beaufschlagt werden.

Die Wirkungsweise der anhand der einzigen Zeichnung erläuterten Bremsanlage ist wie folgt :

Bei Betätigung des Fußbremsventils 11 und Erregung des ersten Kreises, d.h. des elektrischen Steuerkreises für Vorderachse und Hinterachse, wird die elktrische Steuerleitung 13 erregt; als Folge davon werden die elektrischen Steuerleitungen 17 und 19 erregt und steuern den E/P-Umsetzer 5 bzw. 7 in elektromagnetischer Weise auf Durchgang, so daß der über die pneumatischen Vorratsleitungen 31 und 33 an den E/P-Umsetzern 5 und 7 anstehende Druck an die Bremszylinder 1 und 3 angelegt wird, d.h. normale Bremsbetätigung findet statt. Um die geforderte Druckgleichheit an beiden Seiten der Vorderachse und der Hinterachse zu erreichen, sind die elektromagnetisch beeinflußten Ventile 21 und 23 bei Erregung über die elektrischen Steuerleitungen 22 und 24 in geöffneter Lage, d.h. die Ventile 21 und 23 verbinden die Vorsteuerräume der beidseitigen E/P-Umsetzer, so daß vollständig gleiche Druckbedingungen in den Umsetzern vorliegen.

Wenn die Logik des Systems nach Maßgabe einer ABS- oder ASR-Funktion individuelle Drücke in den beidseitigen Bremszylindern der Achsen verlangt, dann überlagert die Funktion der Steuerelektronik 15 die elektrische Beeinflussung des ersten Kreises, d.h. die Ventile 21 und 23 sperren die Verbindung der E/P-Umsetzer 5 und 7 der beiden Seiten von Vorderachse bzw. Hinterachse. Hierdurch ist die nach der herrschenden Logik geforderte individuelle Regelung der beiden Seiten möglich.

Die erfindungsgemäße Ausgestaltung der Bremsanlage gestattet den Einsatz von einfacheren und billigeren E/P-Umsetzern (weniger aufwendige Druckgeber, Proportionalventile, Hochtaktventile etc.); Verschleißunterschiede zu beiden Seiten werden im wesentlichen aufgehoben, was in gleicher Weise zu einer beträchtlichen Kosteneinsparung, insbesonder bei Nutzfahrzeugen, beiträgt.

### Bezugszeichenliste

- 1: Bremszylinder
- 3: Bremszylinder
- 5: E/P-Umsetzer
- 7: E/P-Umsetzer
- 9: Vorratsbehälter
- 11: Fußbremsventil
- 13: Elektrische Steuerleitung
- 15: Steuerelektronik
- 17: Elektrische Steuerleitung
- 19: Elektrische Steuerleitung
- 21: Ventil
- 22: Elektrische Steuerleitung
- 23: Ventil
- 24: Elektrische Steuerleitung
- 25: Pneumatische Leitung
- 27: Pneumatische Leitung
- 29: Pneumatische Leitung
- 31: Pneumatische Vorratsleitung
- 33: Pneumatische Vorratsleitung

## Patentansprüche

1. Elektronisch geregelte Druckluftbremsanlage für Fahrzeuge, insbesondere Nutzfahrzeuge, bei Verwendung je eines E/P-Umsetzers (5,7) zu beiden Seiten von Vorder- und Hinterachse des Fahrzeugs, dadurch gekennzeichnet, daß die E/P-Umsetzer (5) der Vorderachse durch eine erste pneumatische Leitung miteinander verbunden sind, und daß die E/P-Umsetzer (7) der Hinterachse durch eine zweite pneumatische Leitung miteinander verbunden sind, wobei die erste pneumatische Leitung durch ein erstes Ventil (21) und die zweite pneumatische Leitung durch ein zweites Ventil (23) überwacht ist, derart, daß zum Zwecke seitenweiser Druckgleichheit im normalen Betriebsbremszustand jeweils offene Leitungsverbindung in der ersten und zweiten pneumatischen Leitung besteht, wahrend bei Uberlagerung durch die Steuerelektronik (ABS,ASR) des Fahrzeugs die Ventile (21,23) von Vorder- und Hinterachse jeweils die Verbindung zwischen den E/P-Umsetzern (5,7) von Vorder- und Hinterachse sperren.

2. Anlage nach Anspruch 1, dadurch gekennzeichnet, daß das in der pneumatischen Leitung zwischen den E/P-Umsetzern (5,7) befindliche Ventil je als ein 2/2-Magnetventil ausgebildet ist, und daß die 2/2-Magnetventile von Vorder- und Hinterachse jeweils mittels einer elektrischen Steuerleitung (22,24) durch die zentrale Steuerelektronik (15) für ABS, ASR etc. überwacht sind.

3. Anlage nach Anspruch 2, dadurch gekennzeichnet, daß die E/P-Umsetzer (5,7) gleichfalls mittels elektrischer Steuerleitungen (17,19) durch die Steuerelektronik (15) überwacht sind, derart, daß bei Einsetzen der Logik des elektronischen Systems eine individuelle Regelung an den E/P-Umsetzern (5,7) für die Druckbeaufschlagung der Bremszylinder (1,3) für die Vorder- und Hinterachse des Fahrzeugs ermöglicht ist.

## Claims

1. An electronically regulated compressed-air braking system for vehicles, in particular for utility vehicles, when using in each case an E/P converter (5,7) at both sides of the front and rear axle of the vehicle, characterised in that the E/P converters (5) of the front axle are connected to each other by a first pneumatic line and in that the E/P converters (7) of the rear axle are connected to each other by a second pneumatic line, wherein the first pneumatic line is monitored by a first valve (21) and the second pneumatic line is monitored by a second valve (23) in such a way that for the purposes of uniformity of pressure at the sides in the normal operational braking state in each case an open line connection exists in the first and in the second pneumatic line, whilst with superimposition through the control electronic system (ABS, ASR) of the vehicle the valves (21,23) of the front and rear axle block in each case the connection between the E/P converters (5,7) of the front and rear axle.

2. A system according to claim 1, characterised in that the valve located in the pneumatic line between the E/P converters (5,7) is formed in each case as a 2/2 solenoid valve and in that the 2/2 solenoid valves of the front and rear axle in each case are monitored by means of an electric control line (22,24) by the central control electronic system (15) for ABS, ASR etc.

3. A system according to claim 2, characterised in that the E/P converters (5,7) are also monitored by means of electric control lines (17,19) through the control electronic system (15) in such a way that when using the logic of the electronic system an individual regulation is facilitated at the E/P converters (5,7) for the pressure action of the brake cylinders (1,3) for the front and the rear axle of the vehicle.

## Revendications

1. Installation de freinage à air comprimé à régulation électronique pour des véhicules, notamment des véhicules utilitaires, dans le cas de l'utilisation respectivement d'un convertisseur électropneumatique (5, 7) des deux côtés de l'essieu avant et de l'essieu arrière du véhicule, caractérisée par le fait que les convertisseurs électropneumatiques (5) de l'essieu avant sont raccordés entre eux par l'intermédiaire d'une première conduite pneumatique, et que le convertisseur électropneumatique (7) de l'essieu arrière sont reliés entre eux par une seconde conduite pneumatique, la première conduite pneumatique étant contrôlée par une première soupape (21) et la seconde conduite pneumatique par une seconde soupape (23) de sorte que, pour réaliser l'équilibre latéral de pression dans l'état de freinage de service normal, il existe respectivement une jonction ouverte dans les première et seconde conduites pneumatiques, tandis que dans le cas de la superposition réalisée au moyen du système électronique de commande (ABS, ASR) du véhicule, les soupapes (21, 23) de l'essieu avant et de l'essieu arrière bloquent respectivement la liaison entre les convertisseurs électropneumatiques (5, 6) de l'essieu avant et de l'essieu arrière.

2. Installation suivant la revendication 1, caractérisée par le fait que le robinet, qui est situé dans la conduite pneumatique entre les convertisseurs électropneumatiques (5, 7) est réalisé respectivement sous la forme d'une soupape magnétique 2/2, et que les soupapes magnétiques 2/2 de l'essieu avant et de l'essieu arrière sont contrôlées respectivement au moyen d'une ligne électrique de commande (22, 24) par le système électronique central de commande (15) pour les fonctions (ABS, ASR, etc.).

3. Installation suivant la revendication 2, caractérisée par le fait que les convertisseurs électropneumatiques (5, 7) sont également contrôlés au moyen de lignes électriques de commande (17, 19) par le système électronique de commande (15) de sorte que, dans le cas de l'utilisation de la logique du système électronique, une régulation individuelle au niveau des convertisseurs électro-pneumatiques (5, 7) est possible pour charger en pression les cylindres de frein (1, 3) pour les essieux avant et arrière du véhicule.
